# EUROPÄISCHE PATENTANMELDUNG

(11) **EP 1 256 430 A1**
(43) Veröffentlichungstag der Anmeldung: **13.11.2002**
(21) Anmeldenummer: 01111504.5
(22) Anmeldetag: 11.05.2001
(51) Int. Cl.: B29C 44/34

(54) **Spritzgiessmaschine und Spritzgiessverfahren zur Herstellung geschäumter Formteile**

(71) Anmelder: VEREINIGUNG ZUR FÖRDERUNG DES INSTITUTS FÜR KUNSTSTOFFVERARBEITUNG IN INDUSTRIE UND HANDWERK, 52062 Aachen (DE)
(72) Erfinder: Habibi-Naini, Sasan, 52066 Aachen (DE); Pfannschmidt, Oliver, 52060 Aachen (DE); Schlummer, Christian, 52062 Aachen (DE)
(74) Vertreter: Dallmeyer, Georg, Dipl.-Ing.

(57) **Zusammenfassung**

Bei einer Spritzgießmaschine zur Herstellung geschäumter Formteile aus thermoplastischen Materialien im Spritzgießverfahren durch Einbringen eines physikalischen Treibmittels in den Schmelzestrom, mit einer in einem Plastifizierzylinder (2) rotierenden Plastifizierschnecke (3), ist vorgesehen, dass die Plastifizierschnecke (3) stromabwärts einer Meteringzone einen porösen oder permeablen Abschnitt (16) aufweist, der über eine Treibmittelzuführeinrichtung (18) im Schneckenschaft der Plastifizierschnecke (3) mit dem Treibmittel beaufschlagbar ist und das Treibmittel flächig in die Schmelze einbringt.

## Beschreibung

Die Erfindung betrifft eine Spritzgießmaschine und ein Spitzgießverfahren zur Herstellung geschäumter Formteile im Spritzgießprozess unter Verwendung eines physikalischen Treibmittels.

Die Herstellung von Formteilen nach dem Spritzgießverfahren kann neben dem Kompaktspritzgießen auch mittels Schaumspritzgießen oder anderen Sonderverfahren erfolgen. Strukturschaumformteile haben im Gegensatz zu kompakten Bauteilen einen sandwichartigen Aufbau, d.h. eine mehr oder weniger kompakte Außenhaut und einen geschlossenzelligen Kern. Sie zeichnen sich durch günstige materialspezifische Eigenschaften aus und sind darüber hinaus wirtschaftlich interessant. So weisen Strukturformteile eine im Vergleich zu kompakten Formteilen höhere spezifische Steifigkeit durch Verlagerung der Flächenträgheitsmomente in die Randschichten des Bauteils auf. Verzugsarmut, verminderte innere Spannungen und geringe Einfallstellen erlauben eine weitgehend problemlose Herstellung von gerippten Formteilen mit Wanddickensprüngen bei hoher Maßhaltigkeit. Aufgrund des inneren Schmelzedruckes beim Aufschäumen kann auf Nachdruck verzichtet werden, so dass großflächige Formteile mit geringen Zuhaltekräften auf kleineren Maschinen produziert werden können. Die Reduktion der Dichte führt neben Einsparungen auf Seiten der Rohstoffkosten auch zur Verringerung des Bauteilgewichts. Schall- und Wärmedämmung sowie erhöhte Medienbeständigkeit runden das Eigenschaftsprofil geschäumter Bauteile ab.

Die Generierung eines Thermoplastschaumes erfolgt mit Hilfe von Treibmitteln, welche auf unterschiedliche Weise dem Polymermaterial zudosiert werden können und mit der Schmelze ein einphasiges Gemisch bilden. Analog zum konventionellen Spritzgießverfahren wird eine zur Füllung der Werkzeugkavität erforderliche Menge Material im Plastifizierzylinder aufgeschmolzen, im Schneckenvorraum unter Staudruck dosiert und anschließend mit meist hoher Geschwindigkeit in die Werkzeugkavität eingespritzt. Ausgelöst durch den Druckabfall beim Einströmen der Schmelze in das Werkzeug bilden sich Blasen durch Expansion des Treibfluides. Eine Schaumstruktur entsteht. Dabei entscheiden Art und Menge des verwendeten Treibmittels über die erreichbaren Schaumdichten und die zur Herstellung notwendige Anlagentechnik.

Man unterscheidet grundsätzlich chemische von physikalischen Treibmitteln, wobei sich die Differenzierung weniger auf die Schauminitiierung als vielmehr auf die Art der Dosierung bezieht.

Chemische Treibmittel werden dem Polymergranulat in fester Form beigemischt und zersetzen sich bei Wärmezufuhr unter Abspaltung eines oder mehrerer Fluide, meist Stickstoff, Kohlendioxid oder Wasser. Nachteilig sind die bei der Zersetzung anfallenden Restprodukte, welche zur Degradation der Polymermatrix, Verringerung der mechanischen Eigenschaften, zu Verfärbungen im Bauteil und zur Korrosion und Verschmutzung des Werkzeugs führen können. Darüber hinaus können mit chemischen Treibmitteln aufgrund der relativ geringen Gasausbeute bei der Zersetzung nur begrenzte Aufschäumgrade erzielt werden.

Fluide, welche der Polymerschmelze direkt zudosiert werden, bezeichnet man als physikalische Treibmittel. Dies können Inertgase wie Stickstoff und Kohlendioxid, ferner Kohlenwasserstoffe wie Pentan aber auch Wasser sein. Mit physikalischen Treibmitteln lassen sich deutlich höhere Aufschäumgrade erzielen. Da keine Zersetzungsprodukte anfallen, ist weder mit Verfärbungen, noch mit einem Verlust an mechanischen Eigenschaften zu rechnen. Als Nachteil wurde in der Vergangenheit stets die aufwendige Anlagentechnik und die aufgrund der Instationarität des Spritzgießprozesses schwierige Steuerung der Dosierung angeführt.

Grundvoraussetzung für die Entstehung eines Thermoplastschaumes im Spritzgießprozess ist die Generierung eines Polymer/Treibmittel-Systems unter hohem Druck.

Das Treibfluid wird dabei mit dem niedrigviskosen Polymeren in Kontakt gebracht. Abhängig von den Prozessbedingungen finden dann Diffusionsvorgänge statt, welche zu einer Aufnahme des Treibmittels in die Schmelze führen. Nach hinreichender Zeit entsteht somit ein einphasiges Polymer/Treibmittel-System.

Bestehende Verfahren unterscheiden sich weitestgehend in der Art und Weise, wie das Treibfluid mit der Schmelze in Kontakt gebracht wird:

Eine Möglichkeit, Treibmittel im Polymer sehr gleichmäßig zu lösen, besteht in der Vorbeladung des Materials mit dem Treibfluid. Dabei wird das Polymer vor dem Verarbeitungsprozess mit Hilfe einer Hochdruckbegasungsanlage mit Kohlendioxid beladen. Das Kunststoffgranulat wird in einem Autoklaven bei Raumtemperatur mit CO₂ eines definierten Drucks beaufschlagt, wobei das Polymer aufgrund des Konzentrations- und Druckunterschieds Gas aufnimmt. Die Gaskonzentration im Polymer ist dabei u.a. eine Funktion der Begasungszeit. Nachdem die Sättigungskonzentration erreicht ist, wird der Druck auf Umgebungsdruck abgebaut und das beladene Polymer der Spritzgießmaschine über den Materialtrichter zugeführt. Das Material wird im Plastifizierzylinder aufgeschmolzen und homogenisiert, wobei das Gas infolge des Druckaufbaus entlang des Zylinders gelöst vorliegt. Bei Austritt aus der Düse schäumt das Polymer aufgrund der raschen Reduktion des Druckes auf.

Der Nachteil des Verfahrens mit Vorbeladung im Autoklaven liegt in der für die industrielle Verwendung unvorteilhaften, chargenweisen Beladung des Granulats und der fehlenden zeitlichen Flexibilität durch die kontinuierliche Diffusion des Treibmittels aus dem Polymer. Dieses Verfahren findet daher in der industriellen Praxis keine Verwendung.

Ein anderes Verfahren ermöglicht es, das Treibmittel direkt im Schneckenvorraum zuzudosieren. Grundlage dieses Verfahrens ist eine spezielle Eingasungsdüse, die zwischen Zylinder und Einspritzdüse geflanscht wird (DE-A-198 53 021). Kernstück dieser Düse ist ein aus porösem, gasdurchlässigem Sintermetall bestehender Ringspalt, den die Schmelze während des Einspritzvorgangs durchströmt. Ein im Schmelzekanal zentrierter Torpedo sorgt für die strömungstechnisch günstige Aufspaltung der Schmelze vor dem Ringspalt und die Zusammenführung ohne tote Ecken nach der Durchströmung. Statische Misch- und Scherelemente sorgen bei Bedarf für eine homogene Verteilung des Polymer-Treibmittelgemisches. Die Gaszuführung erfolgt über eine Gasdosierstation, welche massenstromgeregelt Variationen des Treibmittelanteils in der Schmelze und damit unterschiedliche Aufschäumgrade zulässt.

Eine andere Technologie basiert auf der Injektion eines physikalischen Treibmittels in den Plastifizierzylinder einer Spritzgießmaschine (EP-A-0 952 908). Das Treibmittel wird dabei über mehrere axial angeordnete Radialöffnungen im Schmelzebereich des Plastifizierzylinders injiziert. Den Öffnungen sind jeweils steuerbare Ventile vorgeschaltet, welche die Verbindung zur Treibmittelversorgung öffnen und schließen können. Eine Kaskadenregelung korreliert dann die Ventilsteuerung mit der Schneckenposition während der Dosierung, d.h. die Ventile werden sukzessive geöffnet und wieder verschlossen. Damit wird versucht, eine möglichst gleichmäßige Injektion des Treibmittels in die Schmelze zu erreichen. Lange Mischzonen sorgen anschließend für eine Homogenisierung des Treibmittel/Polymer-Gemisches, welches im Idealfall vor dem Einspritzvorgang einphasig vorliegt.

Die Nachteile des Verfahrens mit Injektionsdüse bestehen in der Homogenisierung der Schmelze. Während des Einspritzvorgangs steht konsequenterweise nur die Einspritzzeit zur Verfügung, um die Schmelze mit Treibmittel zu versetzen. Unter dem Aspekt, daß bei Schaumspritzgießanwendungen im allgemeinen eine hohe Einspritzgeschwindigkeit gefordert ist, um eine große Nukleierungsdichte zu generieren, reichen diese Zeiten trotz kurzer Diffusionswege im Ringspalt unter Umständen nicht aus, um eine ausreichende und homogene Sorption zu erreichen. Die Zuführung des Treibmittels während der Dosierphase hingegen ist ebenfalls problematisch, da das Volumen der sich im Ringspalt befindlichen Schmelze durch die Geometrie vorgegeben ist. Ist das Volumen des zu spritzenden Formteils nun größer als das Ringspaltvolumen, so wird das Differenzvolumen nicht mit Treibmittel versetzt und die Schaumstruktur des Formteils inhomogen. Ist das Spritzvolumen kleiner als das des Ringspaltes, wird ein Teil der Masse während zwei aufeinander folgenden Dosierphasen beladen. Die ist nur dann unproblematisch, falls bereits ein Dosierzyklus ausreicht, die Schmelze mit Treibmittel im Sättigungszustand anzureichern. Statische Mischelemente bergen zusätzlich die Gefahr, bei thermisch sensiblen Materialien aufgrund der Friktionswärme durch hohe Scherwirkung zur Schädigung der polymeren Matrix zu führen. Aufgrund des hohen Druckniveaus während des Einspritzvorgangs ist eine Dosierstation erforderlich, welche das Treibfluid entsprechend hoch verdichtet.

Bei der Verfahrensvariante mit Injektion in das Plastifizieraggregat ist in erster Linie die Notwendigkeit einer speziellen Spritzgießmaschine nachteilig. Das System der Kaskadenregelung erfordert eine Korrelation mit der Maschinensteuerung, wie sie an herkömmlichen Maschinen nicht vorgesehen ist. Da die Anreicherung der Schmelze mit Treibmittel während der Dosierphase geschieht, in deren Verlauf die Schnecke eine Axialbewegung nach hinten vollzieht, sind, um eine annähernd gleichmäßige Dosierung des Treibfluides in der Schmelze zu realisieren, mehrere Eingasungsports mit der entsprechend aufwendigen Ventiltechnik erforderlich. Diese komplexe Anlagentechnik setzt nicht nur hohe Investitionskosten voraus. Grundsätzlich steigt mit der Komplexität der verwendeten Technik auch die Anfälligkeit für Störungen im Produktionsablauf und erhöht den Aufwand für die Wartung. Die Gewährleistung einer ausreichenden Dispergierung des Treibmittels nach der punktuellen Injektion in die Schmelze setzt ausgeprägte Mischzonen voraus, welche neben einer Sonderschnecke mit langen Mischteilen aufgrund der Schneckenlänge auch ein spezielles Aggregat vorsehen. Ferner ist zur Injektion des Treibfluides eine Dosiereinheit erforderlich.

Der Erfindung liegt die Aufgabe zugrunde, ein physikalisches Treibmittel mit hoher Reproduzierbarkeit und Prozesssicherheit gleichmäßig in den Schmelzestrom einer Spritzgießmaschine einzubringen und zu verteilen, um eine homogene Polymer/Treibmittel-Lösung zu generieren und zwar unter Verwendung einer konventionellen Spritzgießmaschine.

Die Aufgabe wird erfindungsgemäß durch die Merkmale der Ansprüche 1 bzw. 15 gelöst. Die Erfindung sieht in vorteilhafter Weise vor, dass die Plastifizierschnecke stromabwärts einer Meteringzone einen porösen oder permeablen Abschnitt aufweist, der über eine Treibmittelzuführeinrichtung im Schneckenschaft der Plastifizierschnecke mit dem Treibmittel beaufschlagbar ist und das Treibmittel flächig in die Schmelze einbringt.

Mit Hilfe der Erfindung ist es möglich, mit nur geringen Änderungen an einer konventionellen Spritzgießmaschine physikalisch getriebene Strukturschaum-Formteile herzustellen, welche sich durch eine kompakte Außenhaut und einen geschäumten Kern auszeichnen und somit im Vergleich zu kompakten Bauteilen materialspezifische Vorteile mit Einsparungen an Gewicht, Material und damit Kosten verbinden. Desweiteren ist kein Eingriff in die Maschinensteuerung erforderlich, so dass die Investitionskosten gering sind.

Die Erfindung hat im Vergleich zum Stand der Technik folgende Vorteile:
- Geringe Investitionskosten, da keine aufwendige Spezialmaschine notwendig ist, sondern lediglich ein Austausch der Plastifizierschnecke einer konventionellen Spritzgießmaschine.
- Gleichmäßige Treibmitteleinbringung aufgrund eines flächigen, axial mitwandernder und rotierender Eingasungsbereichs während der Polymerdosierung.
- Hoher Homogenisierungsgrad aufgrund intensiver Scher- und Mischvorgänge bei einer im Verlauf der Eingasung stets gleichen wirksamen Länge der Misch- und Scherzonen der Schnecke.
- Optimales Lösungsverhalten aufgrund langer Diffusionszeiten und großer Diffusionsflächen bei kleinen Diffusionswegen.
- Reproduzierbarkeit des Prozesses unabhängig vom Dosiervolumen.
- Hoher Wirkungsgrad des Treibmittels.

Dadurch, dass das Treibmittel in den porösen oder permeablen Abschnitt flächig in die Polymerschmelze eingebracht wird, ist eine gleichmäßige Treibmitteleinbringung während der Polymerdosierung möglich. Es ergibt sich ein verbessertes Lösungsverhalten aufgrund langer Diffusionszeiten und großer Diffusionsflächen bei kleinen Diffusionswegen. Außerdem ist eine hohe Reproduzierbarkeit des Spritzgießprozesses unabhängig vom Dosiervolumen und eine optimale Nutzung des Treibmittels feststellbar. Schließlich hat die Erfindung den Vorteil geringer Investitionskosten, da keine aufwendige Spezialmaschine notwendig ist, sondern lediglich ein Austausch der Plastifizierschnecke der konventionellen Spritzgießmaschine. Ein verlängerter Plastifizierzylinder ist ebenfalls nicht erforderlich. Es genügt eine Standortlänge des Plastifizierzylinders im Bereich des 20- bis 25-fachen des Außendurchmessers der Plastifizierschnecke.

Vorzugsweise ist vorgesehen, dass der Durchmesser Plastifizierschnecke im Bereich des porösen oder permeablen Abschnitts der Plastifizierschnecke verringert ist. Die vergrößerte Schneckengrundtiefe ermöglicht es aufgrund des geringen Druckniveaus der Polymerschmelze im Eingasungsbereich, dass das Treibmittel direkt zugeführt werden kann, ohne dass eine Dosierstation erforderlich ist.

Vorzugsweise wird das Treibmittel der Plastifizierschnecke über ein die Plastifizierschnecke radial umschließendes Hochdruck-Dichtungsgehäuse während der Dosierphase zugeführt. Dabei liegt das physikalische Treibmittel als Fluid vor.

Das Hochdruck-Dichtungsgehäuse erhält das Treibmittel von mindestens einer Druckflasche. Dies hat den Vorteil, dass keine Dosierstation erforderlich ist.

Das Hochdruck-Dichtungsgehäuse bewegt sich simultan mit der Axialbewegung der Plastifizierschnecke ohne Rotation in Axialrichtung mit. Dies ermöglicht aufgrund des flächigen, axial mitwandernden und rotierenden Eingasungsbereich während der Polymerdosierung eine gleichmäßige Treibmitteleinbringung.

Die Polymer-/Treibmittellösung wird bei einer im Verlauf der Eingasung stets gleichen wirksamen Länge von Misch- und Scherelementen der Plastifizierschnecke homogenisiert. Die Injektion des Treibmittels findet während der Dosierphase statt.

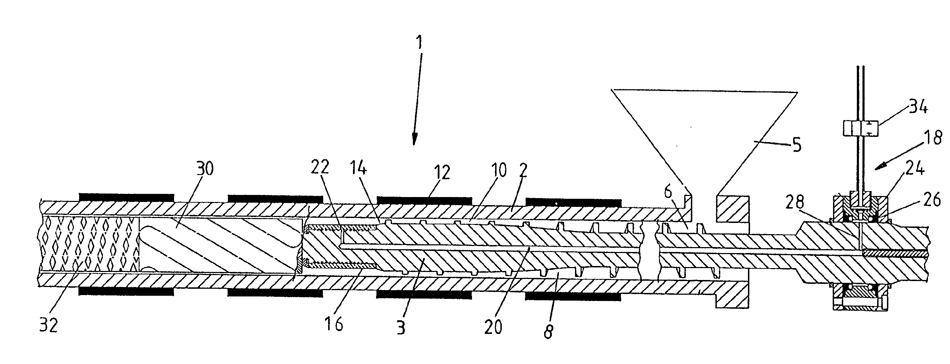

Im folgenden wird unter Bezugnahme auf die einzige Zeichnung die Erfindung näher erläutert:

Die einzige Fig. zeigt einen Plastifizierzylinder 2 einer Spritzgießmaschine 1 mit einer in den Plastifizierzylinder 2 rotierenden Plastifizierschnecke 3.

Das Polymergranulat wird über einen Materialtrichter 5 zugeführt und von der rotierenden Plastifizierschnecke 3 im Bereich einer Einzugszone 6 eingezogen. Die sich anschließende Kompressionszone 8 und Meteringzone 10 bewirken unter Zuhilfenahme der externen Zylinderheizung 12 das Aufschmelzen, Komprimieren und Homogenisieren des polymeren Materials, so dass am Ende der Meteringzone 10 eine thermisch und stofflich homogene Polymerschmelze vorliegt. Am Ende 14 der Meteringzone 10 der Plastifizierschnecke 3 ist der Schneckengrund sprunghaft vergrößert, d.h. der Durchmesser der Plastifizierschnecke 3 ist sprunghaft verringert. In dem Bereich des verringerten Durchmessers ist ein poröser oder permeabler Abschnitt 16 der Plastifizierschnecke 3 vorgesehen, der über eine Treibmittelzuführeinrichtung 18 und eine Bohrung 20 mit einem physikalischen Treibmittel beaufschlagbar ist, wobei das Treibmittel flächig in die Polymerschmelze eingebracht wird.

Der poröse oder permeable Abschnitt 16 dient als Kontaktfläche zwischen dem Treibmittel und der Polymerschmelze. Die Änderung der Schneckengrundtiefe führt in diesem Abschnitt 16 zu einer Druckabsenkung. Das verdichtete Treibmittel, z.B. ein Treibfluid wird über die Bohrung 20 in der Schneckenlängsachse und eine oder mehrere radiale Bohrung 22 zur Verteilung über die z.B. permeable Sintermetalloberfläche zugeführt. Die Gestaltung des porösen oder permeablen Abschnitts 16 kann beispielsweise die Form einer Hülse, eines Zylinders, eines Hohlzylinders aufweisen oder aus mindestens einem in den Schneckenschaft eingesetzten Stopfen oder Ring bestehen.

Der poröse oder permeable Abschnitt 16 kann aus Sintermetall oder aus einem anderen permeablen Material, wie z.B. Keramik gebildet sein.

Die Bohrungen 20,22 sind stromaufwärts des Eingabetrichters 5 mit einer Treibmittelzuführeinrichtung 18 verbunden. Hierzu umschließt ein Dichtungsgehäuse 24 mit einem Gehäusekern und verschraubbaren Deckel die Plastifizierschnecke 3.

Das Dichtungsgehäuse 24 ist zwischen einer nicht dargestellten Antriebseinrichtung für die Plastifizierschnecke 3 und dem Plastifizierzylinder 2 montiert und ist gegen Verdrehen gesichert. Das Dichtungsgehäuse 24 bewegt sich simultan mit der Axialbewegung der Plastifizierschnecke 3. Der axiale Hub der Plastifizierschnecke 3 entspricht beispielsweise dem dreifachen Durchmesser des Plastifizierzylinders 2. Das Dichtungsgehäuse 24 weist spezielle Rotationsdichtungen auf und ist mit Hilfe von Gleitringen auf dem Schneckenschaft zentriert. Ein axiales Verschieben des Dichtungsgehäuses 24 wird durch mechanische Spannelemente verhindert. Als Rotationsdichtungen 26 sind Gleitringdichtungen oder Radial-Wellendichtringe einsetzbar. Eine oder mehrere radiale Bohrungen 28 verbinden den Druckraum der Treibmittelzuführeinrichtung 18 mit der axialen Bohrung 20 in der Längsachse der Plastifizierschnecke 3.

Nach der Zuführung des Treibmittels über die Oberfläche des Abschnitts 16 verteilen förderwirksame Scherelemente 30, sowie Mischelemente 32 das Polymer/Treibmittelgemisch dispersiv und distributiv. Dabei kann sowohl die Geometrie der Scherelemente 30 und der Mischelemente 32 als auch deren Reihenfolge der Anordnung abweichend von der Darstellung in der einzigen Figur sein.

Die Treibmittelzuführeinrichtung 18 erhält das Treibmittel vorzugsweise über handelsübliche Drückgasflaschen. Ein elektrisch, pneumatisch oder hydraulisch betätigtes Ventil 34 verbindet jeweils während der Dosierphase des polymeren Materials die ggf. mit Hilfe eines Druckminderventils gedrosselte Treibmittelversorgung mit dem Hochdruck-Dichtungsgehäuse 24.

## Patentansprüche

1. Spritzgießmaschine zur Herstellung geschäumter Formteile aus thermoplastischen Materialien im Spritzgießverfahren durch Einbringen eines physikalischen Treibmittels in den Schmelzestrom, mit einer in einem Plastifizierzylinder (2) rotierenden Plastifizierschnecke (3),
**dadurch gekennzeichnet,**
**dass** die Plastifizierschnecke (3) stromabwärts einer Meteringzone einen porösen oder permeablen Abschnitt (16) aufweist, der über eine Treibmittelzuführeinrichtung (18) im Schneckenschaft der Plastifizierschnecke (3) mit dem Treibmittel beaufschlagbar ist und das Treibmittel flächig in die Schmelze einbringt.

2. Vorrichtung nach Anspruch 1, **dadurch gekennzeichnet, dass** der Durchmesser der Plastifizierschnecke (3) im Bereich des porösen oder permeablen Abschnitts (16) der Plastifizierschnecke verringert ist.

3. Vorrichtung nach Anspruch 1 oder 2, **dadurch gekennzeichnet, dass** das Treibmittel der Plastifizierschnecke (3) über ein die Plastifizierschnecke (3) radial umschließendes Hochdruck-Dichtungsgehäuse (24) während der Dosierphase zuführbar ist.

4. Vorrichtung nach einem der Ansprüche 1 bis 3, **dadurch gekennzeichnet, dass** der Plastifizierzylinder (2) eine dem 20 bis 25-fachen Durchmesser entsprechende Länge aufweist.

5. Vorrichtung nach einem der Ansprüche 3 oder 4, **dadurch gekennzeichnet, dass** das Hochdruck-Dichtungsgehäuse (24) das Treibmittel von mindestens einer Druckflasche erhält.

6. Vorrichtung nach einem der Ansprüche 3 bis 5, **dadurch gekennzeichnet, dass** das Hochdruck-Dichtungsgehäuse (24) sich simultan mit der Axialbewegung der Plastifizierschnecke (3) in Axialrichtung ohne Rotation mitbewegt.

7. Vorrichtung nach einem der Ansprüche 3 bis 6, **dadurch gekennzeichnet, dass** die Abdichtung des Hochdruck-Dichtungsgehäuses gegen die rotierende Plastifizierschnecke durch Rotations-Wellendichtungen (10) mit Federvorspannung erfolgt.

8. Vorrichtung nach einem der Ansprüche 3 bis 6, **dadurch gekennzeichnet, dass** die Abdichtung des Hochdruck-Dichtungsgehäuses (16) gegen die rotierende Plastifizierschnecke (7) durch Gleitringdichtungen erfolgt.

9. Vorrichtung nach einem der Ansprüche 3 bis 8, **dadurch gekennzeichnet, dass** der poröse oder permeable Abschnitt (16) eine Kontaktfläche zur Polymerschmelze im Plastifizierzylinder (2) aus einem porösen oder permeablen Werkstoff bildet.

10. Vorrichtung nach einem der Ansprüche 3 bis 9, **dadurch gekennzeichnet, dass** der poröse oder permeable Abschnitt (16) aus einer Hülse, Zylinder, Hohlzylinder oder mindestens einem in den Schneckenschaft eingesetzten Stopfen oder Ring besteht.

11. Vorrichtung nach einem der Ansprüche 1 bis 10, **dadurch gekennzeichnet, dass** der poröse oder permeable Abschnitt aus einem porösen oder permeablen Werkstoff z.B. Sintermetall oder einem Keramikwerkstoff besteht.

12. Vorrichtung nach einem der Ansprüche 1 bis 11, **dadurch gekennzeichnet, dass** die Plastifizierschnecke (3) eine Bohrung (20) in der Schneckenlängsachse aufweist, über die das Treibmittel dem porösen oder permeablen Abschnitt (16) zuführbar ist.

13. Vorrichtung nach einem der Ansprüche 1 bis 12, **dadurch gekennzeichnet, dass** die Plastifizierschnecke (3) stromabwärts des porösen oder permeablen Abschnitts (16) Scherelemente (30) auf dem Außenumfang der Plastifizierschnecke (3) aufweist.

14. Vorrichtung nach einem der Ansprüche 1 bis 13, **dadurch gekennzeichnet, dass** die Plastifizierschnecke (3) stromabwärts des porösen oder permeablen Abschnitts (16) Mischelemente (32) auf dem Außenumfang der Plastifizierschnecke (3) aufweist.

15. Spritzgießverfahren zum Herstellen geschäumter Formteile unter Verwendung physikalischer Treibmittel durch Plastifizieren eines in einem Einzugsbereich (6) einer Plastifizierschnecke (3) zugeführten Polymers, durch Zuführen eines Treibmittels in den Schmelzestrom des Polymers über einen durch einen porösen oder permeablen Abschnitt (16) einer Plastifizierschnecke (3) gebildeten flächigen, axial mitwandernden und rotierenden Eingasungsbereich, und durch Einspritzen der homogenisierten Polymer/Treibmlttellösung in eine Form.

16. Spritzgießverfahren nach Anspruch 15, **dadurch gekennzeichnet, dass** die Polymer-/Treibmittellösung bei einer im Verlauf der Eingasung stets gleichen wirksamen Länge von Misch- und Scherelementen (30,32) der Plastifizierschnecke (3) homogenisiert wird.

17. Spritzgießverfahren nach einem der Ansprüche 15 bis 16, **dadurch gekennzeichnet, dass** das Treibmittel ohne Dosierstation direkt aus Druckflaschen über ein Dichtungsgehäuse (16) der Plastifizierschnecke (7) zugeführt wird.

18. Spritzgießverfahren nach einem der Ansprüche 15 bis 17, **dadurch gekennzeichnet, dass** die Injektion des Treibmittels während der Dosierphase stattfindet.

19. Spritzgießverfahren nach einem der Ansprüche 15 bis 18, **dadurch gekennzeichnet, dass** durch Scherelemente (30) der Plastifizierschnecke (7) stromabwärts des Eingasungsbereichs im weiteren Verlauf des Plastifizieraggregats die Verteilung des Treibmittels in der Schmelze verbessert wird und die Diffusionswege verkürzt werden.

20. Spritzgießverfahren nach einem der Ansprüche 15 bis 19, **dadurch gekennzeichnet, dass** durch Mischelemente (32) der Plastifizierschnecke (3) das Polymer/Treibmittel-Gemisch thermisch und stofflich homogenisiert wird.
